# EUROPÄISCHE PATENTSCHRIFT

(11) **EP 0 974 772 B1**
(45) Veröffentlichungstag und Bekanntmachung des Hinweises auf die Patenterteilung: **19.03.2003**
(21) Anmeldenummer: 99113210.1
(22) Anmeldetag: 08.07.1999
(51) Int. Cl.: F16H 21/20

(54) **Exzentertrieb mit verstellbarem Hub**
Eccentric cam drive with variable stroke
Mécanisme d'entraînement excentrique à course réglable

(30) Priorität: 20.07.1998 DE 19832511
(43) Veröffentlichungstag der Anmeldung: 26.01.2000
(73) Patentinhaber: BEHA Innovation GmbH, 79286 Glottertal (DE)
(72) Erfinder: Wehr, Hubert, 53332 Bornheim (DE)
(74) Vertreter: Patentanwälte Westphal, Mussgnug & Partner

(56) Entgegenhaltungen:
- DE-A- 4 226 361
- DE-C- 3 441 213
- US-A- 3 180 178
- US-A- 3 554 846

## Beschreibung

Die Erfindung betrifft einen Exzentertrieb mit Exzenterwelle, deren zylindrisch ausgebildeter Exzenter mit Exzenterbüchse bei Rotation der Exzenterwelle eine kreisförmige Bewegung beschreibt, die über Pleuel, Stößel etc. in eine hin- und hergehende Bewegung umsetzbar ist.

Die bekannten Exzentertriebe, Kurbeltriebe oder Nockentriebe dienen dazu, eine Drehbewegung in eine translatorische Hin- und Herbewegung umzuwandeln, oder umgekehrt. Solche Triebe haben in der Regel einen fest eingestellten Hub, welcher der Exzentrizität des Exzenters der Exzenterwelle/ Nockenwelle bzw. dem Maß der Kurbelkröpfung der Kurbelwelle entspricht.

Bekannt sind auch Kurbeltriebe, bei denen der Hub verstellbar ist (HÜTTE Taschenbuch für Betriebsingenieure, Band II Fertigungsmaschinen, Verlag von Wilhelm Ernst & Sohn, 6. Auflage 1964, Seite 505). Dabei ist auf dem exzentrischen, zylindrisch ausgebildeten Kurbelzapfen einer sog. Stirnkurbelwelle eine mit exzentrisch angeordneter Bohrung versehene Verstellbuchse gelagert, die ihrerseits im Pleuellager eines Pleuels einer Pleuel- Presse gelagert ist. Durch Verdrehung der Verstellbuchse auf dem Kurbelzapfen, was nur während des Stillstandes der Presse möglich ist, ist der Pleuel- Hub von einer maximalen Größe in eine minimale Größe oder umgekehrt veränderbar.

Es gibt aber Bedarfsfälle insbesondere bei mit Exzentertrieb und Pleuelhub arbeitenden Arbeitsmaschinen, bei denen der Hub im Betrieb einstellbar sein soll, insbesondere so, daß die Pleuelhubstellung nach dem Abschalten des Exzenterantriebes genau dieselbe ist wie vor dem Einschalten des Exzenterantriebes. Als konkreter Bedarfsfall wird z.B. das Reibungsschweißen von thermoplastischem und elastischem Kunststoffmaterial angegeben. So müssen z.B. lange Profilriemen mit rundem oder eckigem z.B. fünfeckigem Querschnitt, Keilriemenquerschnitt etc. aus solchem Kunststoffmaterial für die Anfertigung von Transportbändern auf Fertigmaß gebracht und anschließend die Profilriemenenden verschweißt werden, indem das eine Profilriemenende festgehalten wird, während das andere Riemenende gegen das festgehaltene Riemenende gedrückt und gleichzeitig durch translatorische Hin- und Herbewegung unter Reibungswärmeentwicklung daran angeschmolzen wird. Gleiches gilt für die Reparatur solcher Profilriemenbänder nach dem Reißen. Wichtig dabei ist, daß beim endgültigen auf diese Weise herbeigeführten Zusammenschweißen der Profilriemenenden die Riemenenden ganz genau fluchtend zueinander stehen. Dies wird gemäß der gattungsgemäßen US-A-3 554 846 durch einen Exzentertrieb erreicht, bei welchem die Exzenterwelle in eine Zylinderbohrung größeren Durchmessers einer Exzenterbüchse eingreift, wobei die Exzenterbüchse gegenüber der Exzenterwelle derart verschwenkbar ist, daß in einer Stellung Exzenterwelle und Exzenterbüchse konzentrisch und in einer anderen Stellung exzentrisch sind. Ein mit dem Exzentertrieb rotierendes Stellglied hält unter Federbelastung die Exzenterwelle und die Exzenterbüchse in der konzentrischen Stellung und verdreht diese bei rotierendem Exzentertrieb unter Fliehkrafteinwirkung in die exzentrische Stellung.

Der Erfindung liegt die Aufgabe zugrunde, einen einfachen alternativen Exzentertrieb zu schaffen, bei dem gewährleistet ist, daß die Exzentrizität bzw. die Pleuelhubstellung nach dem Abschalten des Exzenterantriebes immer dieselbe ist wie vor dem Einschalten des Exzenterantriebes.

Diese Aufgabe wird erfindungsgemäß mit den Merkmalen des Kennzeichnungsteils des Anspruchs 1 gelöst. Vorteilhafte Weiterbildungen der Erfindung sind in den Unteransprüchen angegeben.

Dadurch, daß beim erfindungsgemäßen Exzentertrieb der zylindrisch ausgebildete Exzenter der Exzenterwelle in der Zylinderbohrung der Exzenterbüchse drehbar gelagert ist derart, daß bei Stillstand des Exzentertriebes zur Herbeiführung der Konzentrizität sich die Exzentrizitäten von Exzenter der Exzenterwelle und Zylinderbohrung der Exzenterbüchse aufheben, während bei Rotation der Exzenterwelle unter Fliehkrafteinwirkung auf wenigstens ein Stellglied selbsttätig fliehkraftgesteuert eine Verdrehung zwischen Exzenterwelle und Exzenterbüchse gegeneinander unter Aufhebung der Konzentrizität erfolgt und die Exzentrizität am Abtrieb des Exzentertriebes wirksam wird, ist das Exzentersystem aus einer ersten Stellung (Ruheposition bzw. Anfahrposition) selbsttätig in eine zweite Stellung (Arbeitsposition bzw. Betriebsposition) verdrehbar, bei der das Exzentersystem eine vorbestimmte Exzentrizität und damit am Abtrieb einen vorbestimmten Pleuelhub aufweist, der z. B. für den Werkzeugträger einer Arbeitsmaschine genutzt werden kann.

Der Hub des Exzentertriebes ist in der Weise selbsttätig verstellbar bzw. einstellbar, daß das wenigstens eine mit dem Exzentertrieb mitrotierende Stellglied unter Fliehkrafteinwirkung sich bewegt und sowohl an der Exzenterwelle als auch an der Exzenterbüchse angreift und diese beiden Bauteile um einen bestimmten Winkelbetrag gegeneinander verdreht und damit die Exzentrizitäten selbsttätig verändert bzw. einstellt, wobei nach dem Abschalten des Exzenterantriebes nach Wegfall der Fliehkrafteinwirkung auf das Stellglied die Exzentrizitätsveränderung durch wenigstens eine Rückstellfeder wieder rückgängig gemacht wird. Auf diese Weise ist gewährleistet, daß nach dem Abschalten des erfindungsgemäßen Exzentertriebes die Pleuelhubstellung automatisch immer ganz genau dieselbe ist wie vor dem Einschalten des Exzentertriebes.

Gemäß der Erfindung weisen sowohl die Exzenterwelle in ihrem Peripheriebereich als auch die Exzenterbüchse in ihrem Peripheriebereich jeweils wenigstens einen sich axial erstreckenden Ansatz auf, wobei unter Fliehkrafteinwirkung das wenigstens eine Stellglied zwischen die Ansätze spreizbar ist, die Ansätze entgegen der Kraft der wenigstens einen Rückstellfeder auseinanderdrückt und Exzenterwelle und Exzenterbüchse gegeneinander verdreht.

Das selbsttätig fliehkraftgesteuerte Stellglied ist eine Kugel, die im Ringraum zwischen der Exzenterwelle und den Ansätzen von Exzenterwelle und Exzenterbüchse frei beweglich ist.

Die Erfindung und deren weitere Merkmale und Vorteile werden anhand des in den Figuren schematisch dargestellten Ausführungsbeispieles näher erläutert. Es zeigt:
Fig. 1 den erfindungsgemäßen Exzentertrieb im Axialschnitt, d.h. geschnitten in einer Ebene, in der die Rotationsachse liegt,
Fig. 2 einen Querschnitt längs der Linie A - A der Fig. 1,
Fig. 3 denselben Querschnitt durch den Exzentertrieb wie bei Fig. 2, jedoch im Unterschied zu Fig. 2 in einer Betriebsposition, bei der die fliehkraftgesteuerten Stellglieder unter Fliehkrafteinwirkung stehen,
Fig. 4 herausgezeichnet aus Fig. 1 die Exzenterwelle in Seitenansicht,
Fig. 5 die Draufsicht auf die Exzenterwelle der Fig. 4,
Fig. 6 die Exzenterwelle der Fig. 4 in perspektivischer Darstellung,
Fig. 7 herausgezeichnet aus Fig. 1 die Exzenterbüchse, ebenfalls in perspektivischer Darstellung,
Fig. 8 die Exzenterbüchse der Fig. 7 in Seitenansicht, und
Fig. 9 die Draufsicht auf die Exzenterbüchse der Fig. 8.

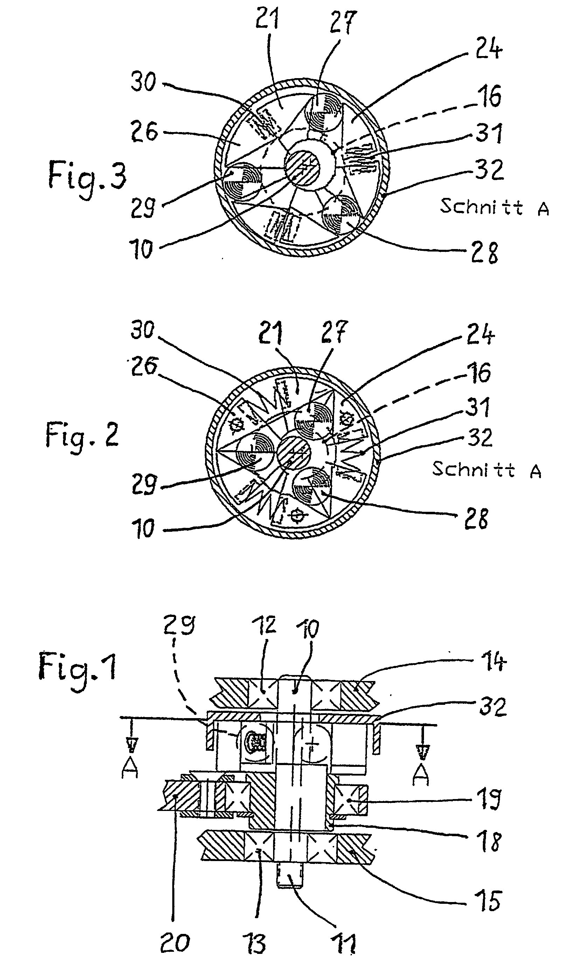

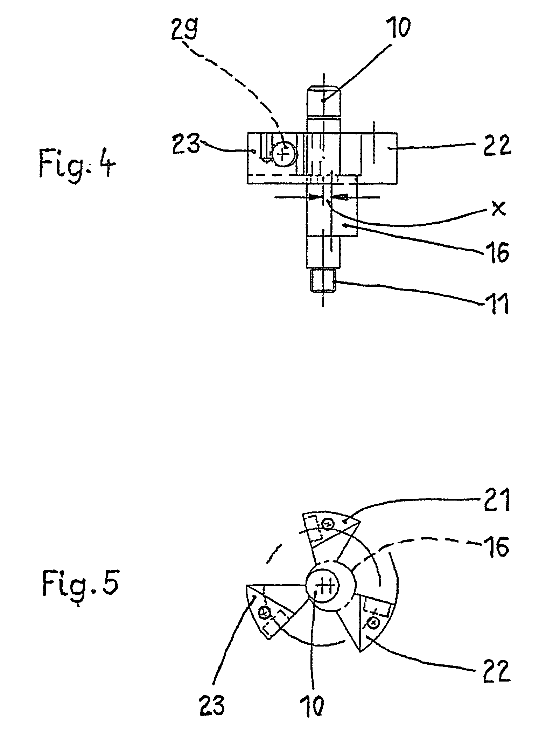

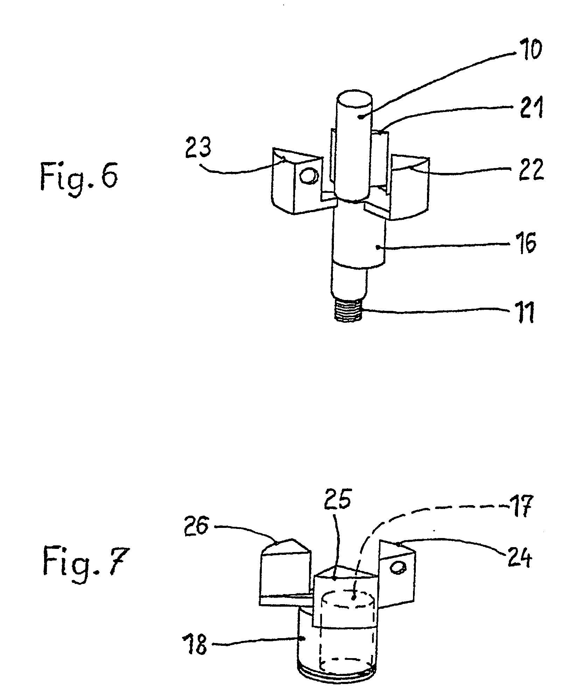

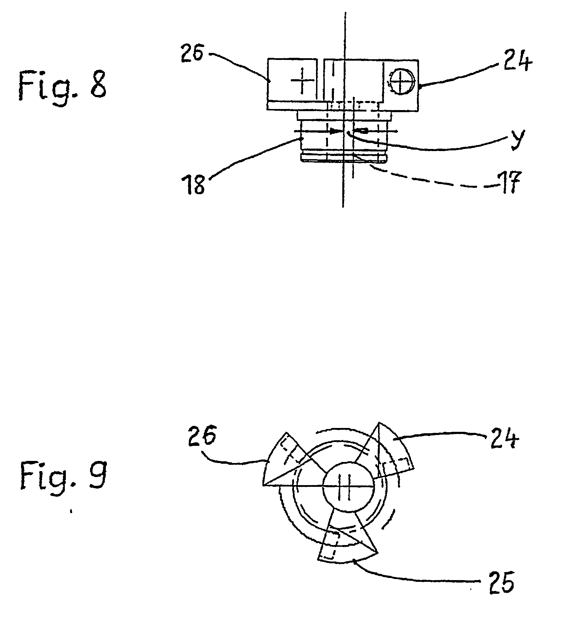

Fig. 1 zeigt, wie der erfindungsgemäße Exzentertrieb mit seiner zentralen Exzenterwelle 10, die über ihren Antriebszapfen 11 und Kupplung z. B. von einem Elektromotor antreibbar ist, über Lager 12 und 13 in einem Gehäuse 14, 15 drehbar gelagert ist. Wie in den Figuren 4 und 6 gut zu erkennen, trägt die Exzenterwelle 10 einen zylindrisch ausgebildeten Exzenter 16, dessen Exzentrizität mit x angezeigt ist. Wie insbesondere bei Betrachtung der Fig. 6 bis 8 hervorgeht, wird der zylindrisch ausgebildete Exzenter 16 der Exzenterwelle 10 in einer Zylinderbohrung 17 einer Exzenterbüchse 18 drehbar gelagert. Die Exzentrizität der Zylinderbohrung 17 ist in Fig. 8 mit y angezeigt, wobei y = x ist. Die Exzenterbüchse 18 ist über Pleuellager 19 im Endbereich eines Pleuels 20 gelagert, das in der Lage ist, bei Rotation der Exzenterwelle 10 die Drehbewegung in eine hin- und hergehende Hubbewegung z. B. in einer Arbeitsmaschine umzuwandeln.

Im zeichnerischen Ausführungsbeispiel, gut zu erkennen in den Figuren 4 bis 9, weist die Exzenterwelle 10 in ihrem Peripheriebereich z. B. drei um den Kreisumfang verteilt angeordnete Ansätze 21, 22, 23 auf, die sich etwa axial erstrecken. Auch die Exzenterbüchse 18 weist in ihrem Peripheriebereich drei um den Umfang verteilt angeordnete sich ebenfalls etwa axial erstreckende Ansätze 24, 25, 26 auf, wobei z. B. der Ansatz 21 der Exzenterwelle 10 zwischen den benachbarten Ansätzen 24, 26 der Exzenterbüchse 18 zu liegen kommt. Im Raum zwischen der Exzenterwelle 10 und allen Ansätzen sind als Massekörper drei frei bewegliche Kugeln 27, 28, 29 angeordnet, die bei Rotation des Exzentertriebes unter Fliehkrafteinwirkung stehen und folgendermaßen als Stellglieder wirken:

Fig. 2 zeigt den Exzentertrieb in Ruheposition, d. h. vor dem Einschalten des Antriebsmotors. In dieser Stillstandsposition ist der Exzenter 16 der Exzenterwelle 10 in der Zylinderbohrung 17 der Exzenterbüchse 18 so gelagert, daß sich die Exzentrizitäten x und y von Exzenter der Exzenterwelle und Zylinderbohrung der Exzenterbüchse zur Herbeiführung der exakten Konzentrizität des Systems gerade aufheben. Nach dem Einschalten des Antriebs des Exzentertriebes werden die Kugeln 27, 28, 29 unter Fliehkrafteinwirkung an die Peripherie geschleudert und sie drücken radial nach außen an die sich spitzwinklig nach außen verengenden Arbeitsflächen bzw. Keilflächen der Ansätze von Exzenterwelle und Exzenterbüchse. So sieht man in den Figuren 2 und 3, wie z. B. die Kugel 27 den Ansatz 21 der Exzenterwelle 10 und den Ansatz 24 der Exzenterbüchse 18 entgegen der Kraft von Rückstellfedern 30, 31 auseinanderdrückt und dabei die Exzenterwelle 10 und die Exzenterbüchse 18 unter Aufhebung der ursprünglichen Systemkonzentrizität gegeneinander (relativ zueinander) verdreht, wodurch die Exzentrizität am Abtrieb des Exzentertriebes, d. h. die Hubbewegung des Pleuels 20 wirksam wird. Nach dem Ausschalten des Antriebsmotors des erfindungsgemäßen Exzentertriebes wird die exakte Konzentrizität des Exzentersystems automatisch wieder hergestellt. Die Exzentrizitätsverstellung erfolgt dabei erfindungsgemäß fliehkraftgesteuert völlig selbsttätig, d. h. es bedarf zur Verstellung keinerlei aufwendiger Meß-, Steuer- und Regelungstechniken.

In den Figuren 1 bis 3 ist noch zu sehen, daß die mit Abstand um den Umfang verteilten Ansätze 21 bis 23, 24 bis 26 von Exzenterwelle 10 und Exzenterbüchse 18 von einem ringkappenförmigen Gehäusedeckel 32 abgedeckt sind.

Die Erfindung ist nicht nur für Exzentertriebe, sondern auch für Kurbeltriebe, Nockentriebe etc. anwendbar, deren Hub bzw. Exzentrizität für bestimmte Anwendungsgebiete selbsttätig verstellbar sein soll.

## Patentansprüche

1. Exzentertrieb mit Exzenterwelle (10), deren zylindrisch ausgebildeter Exzenter (16) mit Exzenterbüchse (18) bei Rotation der Exzenterwelle eine kreisförmige Bewegung beschreibt, die über Pleuel (20), Stößel etc. in eine hin- und hergehende Bewegung umsetzbar ist, wobei der zylindrisch ausgebildete Exzenter (16) der Exzenterwelle (10) in der Zylinderbohrung (17) der Exzenterbüchse (18) drehbar gelagert ist derart, daß bei Stillstand des Exzentertriebes zur Herbeiführung der Konzentrizität sich die Exzentrizitäten (x, y) von Exzenter der Exzenterwelle und Zylinderbohrung der Exzenterbüchse aufheben, während bei Rotation der Exzenterwelle (10) wenigstens ein mit dem Exzentertrieb mitrotierendes Stellglied (27 bis 29) unter Fliehkrafteinwirkung selbsttätig gesteuert sowohl an der Exzenterwelle (10) als auch an der Exzenterbüchse (18) angreift und diese beiden Bauteile mit ihren Exzentrizitäten gegeneinander verdreht, wodurch die Konzentrizität aufgehoben wird und die Exzentrizität am Abtrieb des Exzentertriebes wirksam wird,
**dadurch gekennzeichnet, daß** die Exzenterwelle (10) in ihrem Peripheriebereich und die Exzenterbüchse (18) ebenfalls in ihrem Peripheriebereich jeweils wenigstens einen sich axial erstreckenden Ansatz (21 bis 23, 24 bis 26) aufweisen und daß das wenigstens eine Stellglied eine Kugel (27 bis 29) ist, die unter der Fliehkrafteinwirkung zwischen radial nach außen sich spitzwinklig verengende Arbeitsflächen bzw. Keilflächen der Ansätze (21 bis 23, 24 bis 26) von Exzenterwelle (10) und Exzenterbüchse (18) drückt, diese entgegen der Kraft von Rückstellfedern (30, 31) auseinanderdrückt und Exzenterwelle und Exzenterbüchse gegeneinander verdreht.

2. Exzentertrieb nach Anspruch 1, **dadurch gekennzeichnet, daß** als Stellglieder zwei, drei oder mehr Kugeln (27 bis 29) angeordnet sind, die unter der Fliehkrafteinwirkung an vier, sechs oder mehr axial verlaufenden Ansätzen von Exzenterwelle (10) und Exzenterbüchse (18) angreifen und die Ansätze samt Exzenterwelle / Exzenterbüchse entgegen der Kraft von zwei, drei oder mehr Rückstellfedern (30, 31) verdrehen.

3. Exzentertrieb nach Anspruch 1 oder 2, **dadurch gekennzeichnet, daß** die Rückstellfedern (30, 31) Schraubenfedern sind, die jeweils zwischen einer Seitenfläche des Ansatzes (21) der Exzenterwelle (10) und der gegenüberliegenden Seitenfläche des benachbarten Ansatzes (26) der Exzenterbüchse (18) eingespannt sind.

4. Exzentertrieb nach einem der Ansprüche 1 bis 3, **dadurch gekennzeichnet, daß** die mit Abstand um den Umfang verteilten Ansätze (21 bis 23) der Exzenterwelle (10) sowie die dazwischen angeordneten um den Umfang verteilten Ansätze (24 bis 26) der Exzenterbüchse (18) von einem ringkappenförmigen Gehäusedeckel (32) abgedeckt sind.

## Claims

1. An eccentric drive with an eccentric shaft (10), whose cylindrically constructed eccentric element (16) with eccentric case (18) describes a circular movement upon the rotation of the eccentric shaft, which can be converted via connecting rod (20), driver rod etc. into a to-and-fro movement, whereby the cylindrically constructed eccentric element (16) of the eccentric shaft is pivoted in the cylinder bore (17) of the eccentric case (18) in such a manner that, when the eccentric drive is idle, the eccentricities (x, y) of the eccentric element of the eccentric shaft and cylinder bore of the eccentric case cancel each other out to bring about the concentricity, whereas during the rotation of the eccentric shaft (10) at least one actuator (27 to 29) which rotates with the eccentric drive acts, automatically controlled, under the action of centrifugal force both on the eccentric shaft (10) and on the eccentric case (18) and twists these two components with their eccentricities in relation to each other, by which the concentricity is neutralised and the eccentricity at the driven end of the eccentric drive becomes effective,
**characterised in that** in its peripheral region the eccentric shaft (10) and also in its peripheral region the eccentric case (18) in each case have at least one axially extending projection (21 to 23, 24 to 26),
**and in that** the at least one actuator is a ball (27 to 29), which, under the action of centrifugal force, presses between bearing surfaces and wedge surfaces, which radially outwardly narrow at an acute angle, of the projections (21 to 23, 24 to 26) of eccentric shaft (10) and eccentric case (18), forces these apart against the force of restoring springs (30, 31) and twists the eccentric shaft and the eccentric case in relation to each other.

2. An eccentric drive according to Claim 1,
**characterised in that** two, three or more balls (27 to 29), which under the action of centrifugal force act on four, six or more axially extending projections of eccentric shaft (10) and eccentric case (18), are provided as actuators and twist the projections together with eccentric shaft/eccentric case against the force of two, three or more restoring springs (30, 31).

3. An eccentric drive according to Claim 1 or 2,
**characterised in that** the restoring springs (30, 31) are coil springs, which in each case are clamped between one lateral face of the projection (21) of the eccentric shaft (10) and the opposite lateral face of the adjacent projection (26) of the eccentric case (18).

4. An eccentric drive according to one of Claims 1 to 3,
**characterised in that** the projections (21 to 23) of the eccentric shaft (10), which are distributed around the periphery and also the projections (24 to 26) of the eccentric case (18) which are disposed therebetween and are distributed over the periphery are covered by a housing lid in the form of an annular cap (32).

## Revendications

1. Mécanisme d'entraînement excentrique comprenant un arbre à excentrique (10) dont l'excentrique cylindrique (16) équipé d'une douille à excentrique (18) décrit, quand l'arbre tourne, un mouvement circulaire qui peut être transformé en un mouvement linéaire de va-et-vient par une bielle (20), un poussoir, etc.., et dans lequel
- l'excentrique cylindrique (16) de l'arbre à excentrique (10) est monté tournant dans un alésage cylindrique (17) de la douille à excentrique (18) de manière qu'à l'arrêt du mécanisme d'entraînement excentrique, afin d'établir la concentricité, les extrémités (x, y) de l'excentrique de l'arbre et de l'alésage cylindrique de la douille à excentrique se compensent, alors que la rotation de l'arbre (10) fait qu'au moins un organe de réglage (27 à 29) tournant avec le mécanisme d'entraînement excentrique et commandé automatiquement par l'action de la force centrifuge agit à la fois sur l'arbre à excentrique (10) et sur la douille à excentrique (18) en faisant tourner ces deux composants l'un par rapport à l'autre avec leurs excentricités, de sorte que la concentricité du mécanisme disparaît et qu'une excentricité se manifeste à la sortie du mécanisme,
**caractérisé en ce que**
- l'arbre à excentrique (10) à sa périphérie et la douille à excentrique (18) également à sa périphérie, portent chacun respectivement un appendice (21 à 23, et 24 à 26), et
- l'au moins un organe de réglage est une bille (27 à 29) qui sous l'action de la force centrifuge exerce une poussée entre les portées actives ou formant un coin allant en se rétrécissant radialement vers l'extérieur, selon un angle aigu des appendices (21 à 23, 24 à 26) de l'arbre à excentrique (10) et de la douille à excentrique (18), les portées s'écartant les unes des autres contre l'action de ressorts de rappel (30, 31) en faisant tourner l'un par rapport à l'autre l'arbre à excentrique et la douille à excentrique.

2. Mécanisme d'entraînement excentrique selon la revendication 1,
**caractérisé en ce que**
les organes de réglage sont des billes (27 à 29) au nombre de deux, trois (ou plus), qui sous l'action de la force centrifuge agissent sur quatre, six (ou plus) appendices, s'étendant axialement, que portent l'arbre à excentrique (10) et la douille à excentrique (18), en faisant tourner l'ensemble arbre à excentrique/douille à excentrique contre la force de deux, trois (ou plus) ressorts de rappel (30, 31).

3. Mécanisme d'entraînement excentrique selon l'une quelconque des revendications 1 ou 2,
**caractérisé en ce que**
les ressorts de rappel (30, 31) sont des ressorts hélicoïdaux serrés chacun entre la face latérale de l'appendice (21) porté par l'arbre à excentrique (10) et la face latérale opposée de l'appendice (26) porté par la douille à excentrique (18).

4. Mécanisme d'entraînement excentrique selon l'une quelconque des revendications 1 à 3,
**caractérisé en ce que**
les appendices (21 à 23) répartis de manière espacée à la périphérie de l'arbre à excentrique (10) et les appendices (24 à 26) montés entre eux à la périphérie de la douille à excentrique (18) sont recouverts par un capot de boîtier (32) de forme annulaire.
